# EUROPEAN PATENT SPECIFICATION

(11) **EP 0 405 018 B1**
(45) Date of publication and mention of the grant of the patent: **08.09.1993**
(21) Application number: 89202614.7
(22) Date of filing: 17.10.1989
(51) Int. Cl.: A23L 1/182

(54) **Process for precooking parboiled rice**
Verfahren zum Vorkochen von angekochtem Reis
Procédé de précuisson de riz étuvé

(30) Priority: 30.06.1989 IT 6754189
(43) Date of publication of application: 02.01.1991
(73) Proprietor: AGNESI S.p.A., I-18100 Imperia (IT)
(72) Inventor: Sumbati, Piero Jacques, I-06087 Ponte S. Giovanni Perugia (IT); Ferrero, Franco, I-10147 Torino (IT)
(74) Representative: Robba, Eugenio

(56) References cited:
- BE-A- 638 846
- GB-A- 794 744
- US-A- 3 157 514
- B.S.LUH: "RICE:PRODUCTION AND UTILIZATION" 1980, AVI, WESTPORT, USA

## Description

The present invention relates to a process for precooking rice, in particular parboiled rice, adapted to obtain a rice which after the treatment will cook in boiling water in a time not exceeding 5 minutes.

It is known that at present various systems for precooking rice have been experimented and developed which are adapted to obtain a rice which after the treatment will cook in a few minutes.

Said systems are substantially based on vigorous cooking of the rice in hot water or vapour, followed by a drying phase which in said systems has only the function of drying the product to make it packageable and bring the level of humidity within the limits prescribed by the law.

Some of said processes for precooking rice, adapted to reduce the cooking time of the rice itself, are cited in the publication by B.S. Luh "Rice: Production and Utilization", 1980, AVI, Westport, USA.

According to the Roberts' process (p.571 par.2), the rice is soaked in water at room temperature and then boiled in water for 1-3 minutes. Drying is done in 2 stages; initially the air temperature is set at about 200°C for 1-3 minutes, then the temperature is reduced to about 100°C to complete the drying to about 10-15% moisture. The obtained product can be prepared for serving in about 5 minutes.

Among the processes described in the cited publication, Roberts' process is also a discontinuous process. Moreover, it is said that the rice is soaked in water at room temperature, but the temperatures indicated in Table 16.1 for this step are 20°-60°.

All these processes refer to a normal rice, which has a cooking time of 20 to 30 minutes, whereas the parboiled rice has a cooking time of 35 to 40 minutes.

Object of the present invention is to provide a continuous process for precooking the parboiled rice, in such a manner that after this treatment the cooking time of the parboiled rice in boiling water will effectively not exceed 5 minutes.

The aforementioned purpose, together with other characteristics and advantages, is achieved by the present process which is substantially based on the instantaneous discharge of the water by which the rice has been soaked in several phases, by a thermal shock so as to generate in the structure of the grains a high porosity.

More particularly, the present process is characterized by the following phases:
Introduction of the rice into the soaking vessels containing drinking water at a temperature of between 10 and 30 and preferably of between 15 and 25° C for a time of between 1 and 5 and preferably of between 2 and 4 hours;
Transfer of said soaked rice into a continuously rotating boiler there it remains for a time of 2 to 6, preferably 3 to 5 minutes at a temperature of between 70 and 90°C and preferably of between 75 and 85°C;
Dropping of said rice on to a tunnel conveyor saturated with vapour at a temperature of between 60 and 100°C and preferably of between 70 and 90°C, where it remains for a time of from 4 to 12 and preferably of from 6 to 10 minutes;
Air and water cooling of the rice at the exit of said tunnel until it reaches a temperature of between 20 and 40°C and preferably of between 25 and 35°C;
After reaching this temperature the rice is introduced by means of an appropriate dosing mechanism into a drying tunnel having a temperature of between 160 and 200°C and preferably of between 170 and 190°C and indirect air heating by means of heat exchangers, where it undergoes a thermal shock which modifies its internal structure by making it more porous (and thus cookable in only 5 minutes);
Then the temperatures of the tunnel decrease so that at the exit the rice will have a temperature of between 40 end 80 and preferably of between 50 and 70°C, the dwell time in said drying tunnel being between 4 and 12 and preferably between 6 and 10 minutes and the level of residual humidity in the rice being less than 12%;
The rice thus treated reaches a temperature of about 30°C by cooling naturally on a conveyor, this cooling being facilitated in the summer season by jets of cold air.

Some conditions of execution of the present process, which is believed to be sufficiently described hereinbefore, will now be described.

The introduction of the rice into the soaking vessels is generally affected by means of a conveyor belt. Transfer of the soaked rice into the rotating boiler takes place by means of a continuous pickup device. Dropping of the rice on to the tunnel conveyor saturated with vapour takes place by weight.

The rice is introduced into the drying tunnel, where it undergoes the thermal shock, by means of an appropriate dosing mechanism.

## Claims

1. Process for precooking parboiled rice, characterized by the following phases:
Introduction of the rice into the soaking vessels containing drinking water at a temperature of between 10 and 30 and preferably of between 15 and 25°C for a time of between 1 and 5 and preferably of between 2 and 4 hours;
Transfer of said soaked rice into a continuously rotating boiler where it remains for a time of 2 to 6, preferably 3 to 5 minutes at a temperature of between 70 and 90°C and preferably of between 75 and 85°C;
Dropping of said rice on to a tunnel conveyor saturated with vapour at a temperature of between 60 and 100°C and preferably of between 70 and 90°C, where it remains for a time of from 4 to 12 and preferably of from 6 to 10 minutes;
Air and water cooling of the rice at the exit of said tunnel until it reaches a temperature of between 20 and 40°C and preferably of between 25 and 35°C;
After reaching this temperature, the rice is introduced into a drying tunnel having a temperature of between 160 and 200°C and preferably of between 170 and 190°C and indirect air heating by means of heat exchangers, where it undergoes a thermal shock which modifies its internal structure by making it more porous (and thus cookable in only 5 minutes);
Then the temperatures of the tunnel decrease so that at the exit the rice will have a temperature of between 40 and 80 and preferably of between 50 and 70°C, the dwell time in said drying tunnel being between 4 and 12 and preferably between 6 and 10 minutes and the level of residual humidity in the rice being less than 12%;
The rice thus treated reaches a temperature of about 30°C by cooling naturally on a conveyor, this cooling being facilitated in the summer season by jets of cold air.

2. Process for precooking parboiled rice, according to claim 1, characterized in that the introduction of the rice into the soaking vessels is effected by means of a conveyor belt, the transfer of the soaked rice into the rotating boiler is made by a continuous pickup device, the dropping of the rice on to the tunnel conveyor saturated with vapour takes place by weight, and the introduction of the rice into the drying tunnel, where it undergoes the thermal shock, is carried out by an appropriate dosing mechanism.

## Patentansprüche

1. Verfahren zum Vorkochen von angekochtem Reis, gekennzeichnet durch folgende Stufen:
Einfüllen des Reises in Gefäße, in denen sich Trinkwasser mit einer Temperatur zwischen 10 und 30°C und vorzugsweise zwischen 15 und 25°C befindet und in denen der Reis zwischen 1 und 5, vorzugsweise zwischen 2 und 4 Stunden eingeweicht wird;
Umfüllen dieses eingeweichten Reises in einen sich kontinuierlich drehenden Kochkessel, in dem er für eine Dauer von 2 bis 6, vorzugsweise von 3 bis 5 Minuten bei einer Temperatur zwischen 70 ud 90°C und vorzugsweise zwischen 75 und 85°C verbleibt;
Ablegen dieses Reises auf en mit Dampf gesättigtes Tunnelförderband mit einer Temperatur zwischen 60 und 100°C, vorzugsweise zwischen 70 und 90°C, wo der Reis für eine Dauer von 4 bis 12 und vorzugsweise von 6 bis 10 Minuten verbleibt;
Luft- und Wasserkühlung des Reises am Ende dieses Tunnels, bis er eine Temperatur zwischen 20 und 40°C und vorzugsweise zwischen 25 und 35°C erreicht;
Nach Erreichen dieser Temperatur wird der Reis in einen Trocknungstunnel gebracht, in dem die Temperatur zwischen 160 und 200°C und vorzugsweise zwischen 170 und 190°C beträgt und der mittels eines Wärmetauschers indirekt durch Luft erhitzt wird und in dem der Reis einem Wärmeschock ausgesetzt wird, wodurch sich seine innere Struktur ändert und er poröser wird (und somit in nur 5 Minuten Kochzeit gegart werden kann);
Die Temperatur im Tunnel wird dann abgesenkt, so daß der Reis am Tunnelende eine Temperatur zwischen 40 und 80°C und vorzugsweise zwischen 50 und 70°C hat, wobei die Verweilzeit in diesem Trocknungstunnel zwischen 4 und 12 und vorzugsweise zwischen 6 und 10 Minuten beträgt und der Reis eine Restfeuchtigkeit von weniger als 12% aufweist.
Der so behandelte Reis erreicht eine Temperatur von ungefähr 30°C durch natürliches Abkühlen auf einem Förderband, wobei diese Abkühlung im Sommer durch kalte Luftströme erleichtert werden kann.

2. Verfahren zum Vorkochen von angekochtem Reis nach Anspruch 1, dadurch gekennzeichnet, daß das Einfüllen des Reises in die Einweichgefäße mittels eines Förderbandes erfolgt, das Umfüllen des eingeweichten Reises in den sich drehenden Kochkessel mitttels einer fortlaufenden Aufnehme-Einrichtung, das Ablegen des Reises auf das mit Dampf gesättigte Tunnelförderband durch Gewicht und das Einfüllen des Reises in den Trocknungstunnel, in dem er einem Wärmeschock ausgesetzt wird, durch einen geeigneten Dosiermechanismus erfolgt.

## Revendications

1. Procédé de précuisson de riz étuvé, caractérisé par les phases suivantes :
Introduction du riz dans des récipients de trempage contenant de l'eau potable à une température comprise entre 10 et 30 et de préférence entre 15 et 25°C pendant une durée comprise entre 1 et 5 de préférence entre 2 et 4 heures;
Transfert dudit riz trempé dans un cuiseur tournant en continu où il séjourne pendant une durée de 2 à 6, de préférence 3 à 5 mn à une température comprise entre 70 et 90°C de préférence entre 75 et 85°C;
Versage dudit riz sur un convoyeur-tunnel saturé de vapeur à une température comprise entre 60 et 100°C de préférence entre 70 et 90°C où il séjourne pendant une durée de 4 à 12 et de préférence de 2 à 6 mn;
Refroidissement à l'air et à l'eau du riz à la sortie dudit tunnel jusqu'à ce qu'il atteigne une température comprise entre 20 et 40°C de préférence entre 25 et 35°C;
Après avoir atteint cette température le riz est introduit dans un tunnel de séchage possédant une température comprise entre 160 et 200°C de préférence entre 170 et 190°C, et chauffage indirect à l'air au moyen d'échangeurs thermiques, où il est soumis à un choc thermique qui modifie sa structure interne en le rendant plus poreux (et donc apte à être cuit en 5 mn seulement);
Puis les températures du tunnel diminuent de telle sorte qu'à la sortie le riz possède une température comprise entre 40 et 80 et de préférence entre 50 et 70°C, le temps de séjour dans ledit tunnel de séchage étant compris entre 4 et 12 et de préférence entre 6 et 10 mn et le niveau d'humidité résiduelle dans le riz étant inférieur à 12%;
Le riz ainsi traité atteint une température d'environ 30° par refroidissement naturel sur un convoyeur, ce refroidissement étant facilité en été par des jets d'air froid.

2. Procédé de précuisson de riz étuvé selon la revendication 1, caractérisé par le fait que l'introduction du riz dans les récipients de trempage est effectuée au moyen d'une bande convoyeuse, le transfert du riz trempé dans le cuiseur tournant est effectué par un dispositif de préhension continu, le versage du riz sur le convoyeur-tunnel saturé de vapeur alieu par gravité, et l'introduction du riz dans le tunnel de séchage, où il est soumis à un choc thermique est effectuée par un mécanisme de dosage approprié.
